# EUROPÄISCHE PATENTSCHRIFT

(11) **EP 0 514 856 B1**
(45) Veröffentlichungstag und Bekanntmachung des Hinweises auf die Patenterteilung: **27.12.1996**
(21) Anmeldenummer: 92108493.5
(22) Anmeldetag: 20.05.1992
(51) Int. Cl.: H04Q 11/04, H04L 12/56, H04J 3/16

(54) **Koppelfeld zum Durchschalten von Kanälen**
Channel switching network
Réseau de commutation pour commuter des canaux

(30) Priorität: 24.05.1991 DE 4116939
(43) Veröffentlichungstag der Anmeldung: 25.11.1992
(73) Patentinhaber: Alcatel SEL Aktiengesellschaft, D-70435 Stuttgart (DE)
(72) Erfinder: Beisel, Werner, W-6472 Altenstadt (DE)
(74) Vertreter: Schätzle, Albin, Dipl.-Phys.

(56) Entgegenhaltungen:
- EP-A- 0 024 708
- EP-A- 0 053 267
- WO-A-88/07298
- DE-A- 3 609 733
- FR-A- 2 462 835
- GB-A- 2 014 018
- GB-A- 2 026 285
- US-A- 4 450 557
- IEEE JOURNAL ON SELECTED AREAS IN COMMUNICATIONS Bd. 6, Nr. 9, Dezember 1988, Seiten 1528 - 1537 , XP112418 DEVAULT ET AL 'The "Prelude" ATD Experiment: Assessmrnts and Future Prospects'

## Beschreibung

Die Erfindung betrifft ein Koppelfeld für Verbindungsknoten eines Nachrichtenübertragungssystems zum Durchschalten von Kanälen, die im Rahmen eines Zeitmultiplexsignals einem oder mehreren Zeitschlitzen zugeordnet sind.

Solche Verbindungsknoten sind vor allem für digitale Übertragungsnetze der "synchronen digitalen Hierarchie" (SDH) vorgesehen. Diese Verbindungsknoten sollen es ermöglichen, Multiplexsignale über verschiedene Verbindungswege durchzuschalten.

Zeitmultiplexsignale z.B. nach den CCITT-Empfehlungen G.707, G.708 und G.709 bestehen aus sogenannten Containern, in denen sich die zu übertragenden Signale befinden. In jedem Container werden nun ein oder mehrere Kanäle übertragen. Jeder Container ist dabei durch Hinzufügen eines Zusatzsignales (POH) zu einem sogenannten virtuellen Container (VC) ergänzt. Ein sogenannter Kopfteil (SOH) ergänzt einen oder mehrere virtuelle Container (VC) zu einem STM-Zeitmultiplexsignal.

Ein solcher Verbindungsknoten ermöglicht nun ein Durchschalten einzelner virtueller Container von einem STM-Zeitmultiplexsignal in ein anderes STM-Zeitmultiplexsignal und/oder das Verändern der Reihenfolge einzelner virtueller Container innerhalb eines STM-Zeitmultiplexsignales.

Solche Verbindungsknoten finden ihre Anwendung auch in plesiochronen Übertragungsnetzen, oder in Übertragungsnetzen, die sowohl aus plesiochronen Netzteilen als auch synchronen Netzteilen bestehen.

Ein Koppelfeld eines solchen Verbindungsknotens ist aus der EP 0 378 122 A1 bekannt. Zum Durchschalten weist das bekannte Koppelfeld Schaltgruppen auf, die aus einer Vielzahl von Schaltelementen bestehen. Jedes Schaltelement weist einen Speicher zum Zwischenspeichern der Daten auf. Die Schaltelemente sind zeilen- und spaltenförmig angeordnet, dabei sind sämtliche Schaltelemente einer Zeile mit einem Dateneingang einer solchen Schaltgruppe und sämtliche Schaltelemente einer Spalte mit einem Datenausgang der Schaltgruppe verbunden, und es sind in jedem Schaltelement einer Zeile die gleichen Daten gespeichert. Jedes Schaltelement ist mit einem Verbindungsspeicher verbunden, über den die Leseadresse dem Schaltelement zugeführt wird, und bei dem auf diese Weise die Reihenfolge der zu lesenden Kanäle festgelegt wird. Durch die spaltenweise Anordnung der Schaltelemente können an jedem Datenausgang die an einem beliebigen Dateneingang anliegenden Daten gelesen werden.

Beim bekannten Koppelfeld ist es daher erforderlich, daß die zu übertragenden Signale eines an den Dateneingängen anliegenden Zeitmultiplexsignals auf sämtliche Ausgänge des Koppelfeldes in so vielen Speicherelementen zwischengespeichert sein müssen, wie das Koppelfeld Datenausgänge aufweist. Dies erfordert eine hohe Speicherkapazität und einen entsprechend hohen technischen Aufwand beim Auslesen der Speicher, was sich insbesondere bei hohen Bitfolgefrequenzen und/oder paralleler Bearbeitung von Daten nachteilig auswirkt.

Der Erfindung liegt daher die Aufgabe zugrunde, ein einfacher aufgebautes Koppelfeld zu schaffen.

Diese Aufgabe wird durch das Koppelfeld des Anspruchs 1 gelöst.

Die Erfindung und vorteilhafte Ausführungsarten werden im folgenden anhand der Figuren 1 bis 6 beschrieben. Es zeigen:
- Fig. 1: eine erste Ausführungsart einer Schaltgruppe als Blockschaltbild,
- Fig. 2: ein strukturell dargestelltes STM-1-Zeitmultiplexsignal mit durchgeschalteten Kanälen,
- Fig. 3a bis 3c: eine Zeile eines STM-Zeitmultiplexsignals, seine erfindungsgemäße Aufteilung in zwei unterschiedliche Blöcke im Zwischenspeicher und eine erfindungsgemäße Art der Leseadressenangaben der Blöcke durch Invertierung der Adresse jedes zweiten Rahmens,
- Fig. 4: einen Zwischenspeicher einer Schaltgruppe als Blockschaltbild,
- Fig. 5: eine zweite Ausführungsart einer Schaltgruppe als Blockschaltbild, und
- Fig. 6: ein aus matrixförmig angeordneten Schaltgruppen bestehendes Koppelfeld.

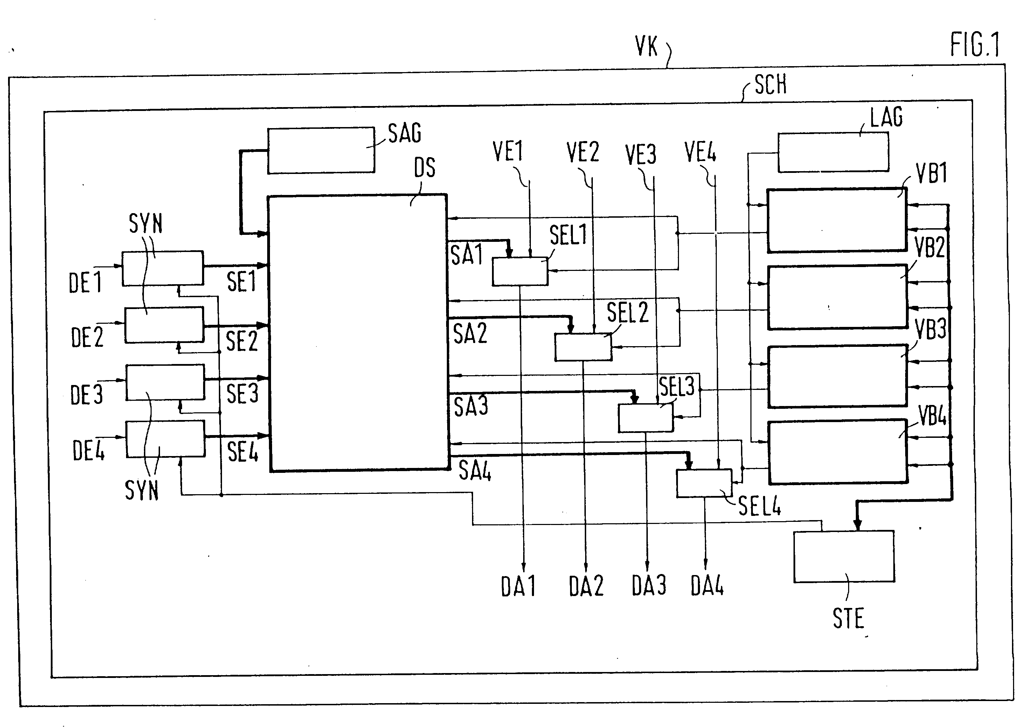

In Fig. 1 ist eine vorteilhafte Ausführungsart eines erfindungsgemäßen Koppelfeldes für einen Verbindungsknoten VK eines Nachrichtenübertragungssystems zum Durchschalten von Kanälen, die im Rahmen eines Zeitmultiplexsignals einem oder mehreren Zeitschlitzen zugeordnet sind, abgebildet, das in der Regel eine Vielzahl von Schaltgruppen enthält, von denen eine Schaltgruppe SCH stellvertretend für alle Schaltgruppen abgebildet ist.

Die Schaltgruppe SCH weist vier Dateneingänge DE1 bis DE4 und vier Datenausgänge DA1 bis DA4 auf. Vier Verbindungseingänge VE1 bis VE4, die jeweils mit einem Datenausgang einer benachbarten Schaltgruppe verbunden sind, sind jeweils mit einem Datenausgang DA1 bis DA4 der Schaltgruppe SCH verbindbar angeordnet. Die Datenausgänge sind ggf. über weitere Schaltgruppen direkt mit den Ausgängen des Koppelfeldes verbunden. Jeder dieser Ausgänge führt zu einem weiteren Verbindungsknoten oder zu einer anderen Stelle des Nachrichtenübertragungssystems. Jeder Dateneingang DE1 bis DE4 ist mit einem Eingang des Koppelfeldes verbunden. Jeder dieser Eingänge steht mit einem Ausgang eines anderen Verbindungsknotens oder einer anderen Stelle des Übertragungssystemes in Verbindung.

Die Aufgabe einer Schaltgruppe ist es, jeden beliebigen Kanal eines in einem Rahmen strukturierten Zeitmultiplexsignals, das z.B. am Dateneingang DE1 anliegt, hinsichtlich anderer Kanäle in beliebiger Reihenfolge einem Zeitmultiplexsignal zuzuordnen, das über einen der Datenausgänge DA1 bis DA4 weitergeleitet wird. D.h., die Schaltgruppe muß in der Lage sein, die Reihenfolge der Kanäle in einem Zeitmultiplexsignal zu rangieren und verschiedene Kanäle eines eingehenden Zeitmultiplexsignals auf verschiedene, am Datenausgang DA1 bis DA4 weitergeleitete Zeitmultiplexsignale schaltbar zu verteilen.

Diese Aufgabe wird von einem Datenspeicher, von Selektoren SEL1 bis SEL4, von Verbindungsspeichern VB1 bis VB4 in Verbindung mit einem Schreibadressgenerator SAG, einem Leseadressgenerator LAG, einer Steuereinheit STE, von Synchronisationsschaltungen SYN und den zugehörigen Verbindungsleitungen in nachfolgend beschriebener Art erfüllt.

Eine Voraussetzung zur Erfüllung dieser Aufgabe ist es nun, daß die an den Speichereingängen SE1 bis SE4 anliegenden Zeitmultiplexsignal synchron eingehen und eine gleiche Rahmenperiodendauer, z.B. 125 s, aufweisen.

Notwendige Anpassungen werden durch die Synchronisationsschaltungen SYN vorgenommen, die mit einer gemeinsamen Steuereinheit STE verbunden sind. Die Funktionsweise einer derartigen Synchronisationseinrichtung als solche ist bekannt.

Den Zeischlitzen des Multiplexsignals werden im Datenspeicher Speicheradressen zugeordnet. Das Generieren der Schreibadresse ist dabei mit den einkommenden Rahmen synchronisiert. Die Art des Einschreibens in den Datenspeicher DS wird später beschrieben.

Das Auslesen des Datenspeichers erfolgt über die Verbindungsspeicher VB1 bis VB4, die jeweils die Leseadressen eines der vier Speicherausgänge SA1 bis SA4 angeben. Über den Verbindungsspeicher VB1 wird z.B. diejenige Adresse angegeben, die den Speicher angibt, dessen Inhalt an den Speicherausgang SA1 weitergeleitet werden soll. Jeder Speicherausgang SA1 bis SA4 ist über einen der Selektoren SEL1 bis SEL4 mit einem Datenausgang DA1 bis DA4 verbunden. Neben den Speicherausgängen SA1 bis SA4 liegen jeweils ein Verbindungseingang VE1 bis VE4 an einem Selektor SEL1 bis SEL4 an. Der Ausgang jedes Selektors SEL1 bis SEL4 ist mit einem der Datenausgänge DA1 bis DA4 verbunden.

Jeder Selektor SEL1 bis SEL4 wird durch jeweils einen Verbindungsspeicher VB1 bis VB4 angesteuert, der dann beispielsweise für den Selektor SEL1 wahlweise den Speicherausgang SA1 oder den Verbindungseingang VE1 zum Datenausgang DA1 durchschaltet.

Die Durchschaltinformation, d.h. welcher Kanal auf welchen Datenausgang und dort in welchen Zeitschlitz oder in welche Zeitschlitze zu schalten ist, erhalten die Verbindungsspeicher VB1 bis VB4 von der Steuereinheit STE.

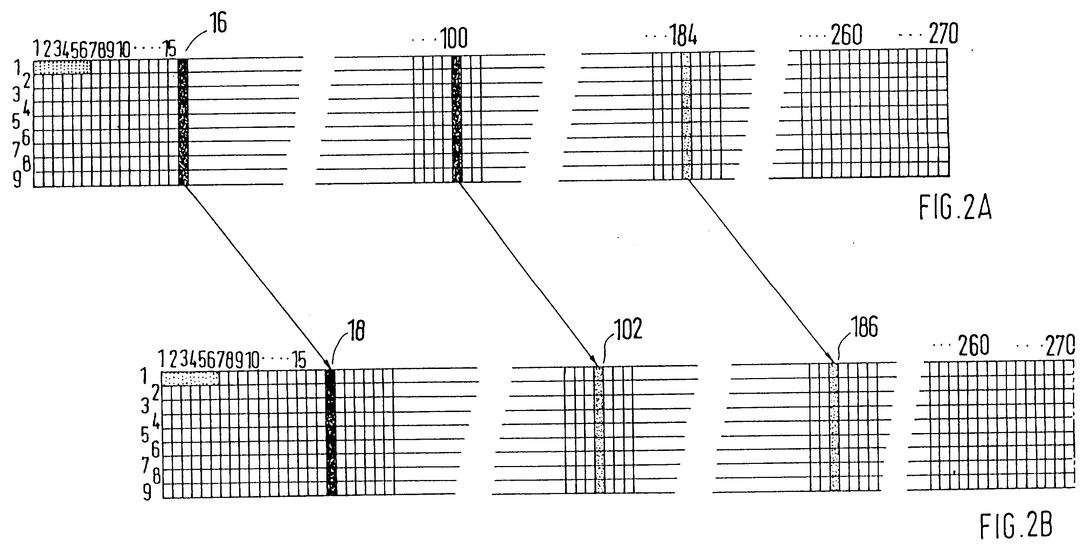

Das Einschreiben in den Datenspeicher DS wird beispielhaft anhand von durchzuschaltenden STM-1-Zeitmultiplexsignalen mit VC-11-Containern mit Bezug auf die Fig. 2 beschrieben.

Es ist dabei nicht erfindungswesentlich, daß gerade STM-1-Zeitmultiplexsignale an den Speichereingängen SE1 bis SE4 anliegen, es können auch STM-Zeitmultiplexsignale höherer Multiplexstufe und grundsätzlich auch Zeitmultiplexsignale unterschiedlicher Multiplexstufen an den einzelnen Speichereingängen anliegen. Die STM-Zeitmultiplexsignale können auch andere virtuelle Container, z.B. VC-4- oder VC-12-Container oder eine Mischung verschiedener virtueller Container enthalten. Die Art der druchzuschaltenden virtuellen Container hat lediglich einen Einfluß auf die Dimensionierung des Datenspeichers DS.

Wichtig für das Funktionieren der Schaltgruppe ist es, daß sich einzelne Kanäle im eingehenden Datenstrom jeweils über eine Rahmenperiode hinweg stets im selben Zeitschlitz des Rahmens befinden. Da der STM-1-Rahmen zeilenweise eingeht, hat dies zur Folge, daß ein und dieselbe Adresse der gleichen Spalte des STM-1-Rahmens zugeordnet wird, was ein spaltenweises Schalten des STM-1-Rahmens zur Folge hat.

Die o.g. Bedingungen können auch von plesiochron übertragenen Zeitmultiplexsignal erfüllt werden.

Beim STM-1-Zeitmultiplexsignal müssen zur Erfüllung dieser Bedingungen noch zusätzliche Maßnahmen ergriffen werden, da der oder die virtuellen Container VC im Nutzbereich eines STM-1-Zeitmultiplexsignals beweglich angeordnet sind. Um den Anfang der einzelnen virtuellen Container VC zu erkennen, ist diesem ein sogenannter Pointer zugeordnet. Zur Verwendung der erfindungsgemäßen Schaltgruppe zum Durchschalten von Kanälen von STM-1-Zeitmultiplexsignalen ist es daher erforderlich, die Position der virtuellen Container in einem STM-1-Zeitmultiplexsignal so zu wählen, daß der Pointer jedes virtuellen Containers VC in der ersten Zeile eines STM-1-Zeitmultiplexsignals beginnt. Dies hat zur Folge, daß ein virtueller Container je nach Art des Containers eine oder mehrere Spalten des STM-1-Zeitmultiplexsignals voll ausfüllt. Beim Vorliegen von virtuellen Cointainern VC-11 sind dies drei Spalten, die in einem nach der o.g. Ordnungsprinzip aufgeteilten Rahmens eines STM-1-Zeitmultiplexsignals, im folgenden STM-1∗∗-Rahmen genannt, einen Abstand von 83 Spalten haben. Die Umwandlung des Rahmens eines STM-1-Zeitmultiplexsignals in einen STM-1∗∗-Rahmen ist nicht Gegenstand dieser Erfindung. Eine vorteilhafte Einrichtung zur Umwandlung ist aus der veröffentlichten europäischen Patentanmeldung EP-A-0 440 128 (07.08.91) bekannt.

Bedingt durch die Umwandlung des Rahmens des STM-l-Zeitmultiplexsignals in einen STM-1∗∗-Rahmen können die einzelnen Kanäle durchgeschaltet werden, indem Spalten des STM-1∗∗-Rahmens durchgeschaltet werden.

In Fig. 2 ist beispielsweise das Durchschalten eines STM-1∗∗-Rahmens mit VC-11-Containern erläutert. Der STM-1∗∗-Rahmen enthält 270 Spalten mit je einem Byte und 9 Zeilen. Jedes Byte stellt ein Teilsignal aus acht Bits dar. Die Spalten 1 bis 9 stellen den Kopfteil SOH und die Spalten 10 bis 270 den Nutzteil des Rahmens dar. Die Belegung des Nutzteils mit VC-11-Containern bedeutet, daß im Nutzteil 84 Kanäle übertragen werden können, die jeweils auf drei äquidistant angeordnete Zeitschlitze verteilt sind. Im oberen Teil der Fig. 2 ist ein eingehender STM-1∗∗-Rahmen abgebildet, in dem ein Kanal, dem die Spalten 16, 100 und 184 zugeordnet sind, in einen ausgehenden STM-1∗∗-Rahmen (unterer Teil der Figur) in die Spalten 18, 102 und 186 durchgeschaltet wird.

Ein verwendeter vorteilhafter Zwischenspeicher DS weist hierzu neben den vier Speichereingängen SE1 bis SE4 vier Speicherausgänge SA1 bis SA4, einen Eingang für die Schreibadresse und vier Eingänge für die Leseadressen auf. Der Datenspeicher DS hat eine Speicherkapazität von 180 x 32 Bit und teilt sich in vier Teilbereiche zu je 180 x 8 Bit mit einer Tiefe von 180 adressierbaren Speicherplätzen auf, wobei jeder Speicherplatz zum Speichern von einem Byte vorgesehen ist. Über jeden Speichereingang SE1 bis SE4 werden die Daten für jeweils einen Teilbereich eingeschrieben, d.h. es wird nur ein Schreibadresseneingang benötigt, um die eingehenden Teilsignale dem gewünschten Speicherplatz zuzuordnen.

Die Bemessung der Tiefe der Datenspeicher ergibt sich aus der Art der übertragenen virtuellen Container VC und dem Bedürfnis, Kanäle, deren Zeitschlitze eine höhere Spaltennummer im STM-1∗∗-Rahmen aufweisen, in Zeitschlitze mit einer niedrigeren Nummer durchzuschalten (Time Slot Interchange). Bei der vorliegenden Ausführungsart, bei der VC-11-Container durchgeschaltet werden sollen, werden dem Nutzteil drei äquidistant liegende Zeitschlitze zugeordnet. Hier genügt es, ein Drittel des gesamten Nutzbereichs zu jedem Zeitpunkt zwischenzuspeichern. Um Time-Slot-Interchange zu ermöglichen, müssen auch die Zeitschlitze von einem nachfolgenden Drittel auf das vorhergehende Drittel durchgeschaltet werden können, was letztlich unter Berücksichtigung einer harmonischen Speichergröße zu der Speichertiefe 180 Speicherplätzen (270 Speicherplätze : 3 x 2 = 180 Speicherplätze) führt. Beim Vorliegen anderer virtueller Container berechnet sich die Anzahl der benötigten Speicherplätze entsprechend.

Zur Adressierung ist jeder Teilbereich des Datenspeichers DS in zwei Blöcke B0 und B1 aufgeteilt, so daß eine Adresse aus der Angabe des Teilbereichs, des Blockes und der Speicherplätze 00 bis 89 besteht. Durch die vorteilhafte Adressierung der Speicherplätze ist die Adresse jedes Speicherplatzes mit 7 Bit zur Bestimmung des Speicherplatzes in einem Block mit einem Bit zur Bestimmung des Blockes und mit zwei weiteren Bits zur Bestimmung des Teilbereichs festgelegt.

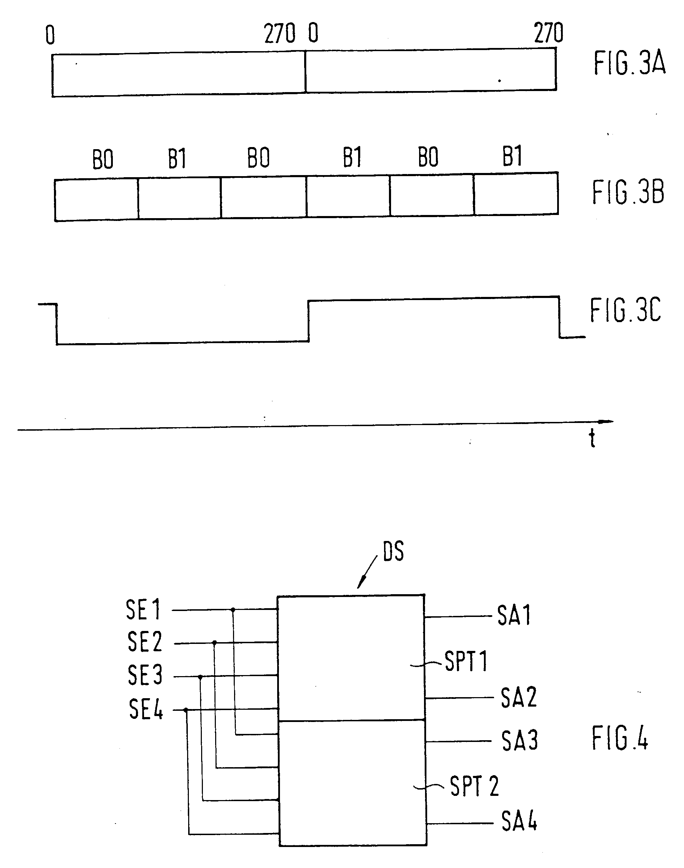

An den Speichereingängen SE1 bis SE4 anliegende Daten werden abwechselnd in Block 1 oder Block 2 eingeschrieben. Dabei werden zuerst die 90 Speicherplätze von Block 1 und anschließend die von Block 2 beschrieben. Dies führt beim Abspeichern von Teilsignalen eines Rahmens mit 270 Spalten in zwei Blöcke mit je 90 Speicherplätzen dazu, daß das in einer Zeile befindliche Teilsignal einer Spalte, z.B. in Block 1 abgespeichert wird, das in der nächsten Zeile befindliche Teilsignal derselben Spalte aber in Block 2 abgespeichert wird. In diesem Fall wird das Leseadressignal zur Adressbestimmung des Blockes an jedem Verbindungsspeicher zum Auslesen jeder zweiten Zeile des Rahmens invertiert, wie dies in Fig. 3A bis Fig. 3C dargestellt ist. Bei virtuellen Containern, denen die Kanäle einer geradzahligen Anzahl von Zeitschlitzen zugeordnet sind, ist eine solche Invertierung nicht vorgesehen.

In der oben beschriebenen Ausführungsart wird als Datenspeicher DS ein sogenannter 5-Port-RAM, d.h. ein umprogrammierbarer Speicher mit einem Schreibsadresseingang und vier voneinander unabhängigen Leseadressausgängen verwendet. Solche 5-Port-RAMs können, z.B., wenn aufgrund hoher Bitfolgefrequenzen die Zugriffszeiten auf die Speicherplätze sehr kurz sind, wie in Fig. 4 abgebildet, aus zwei 3-Port-RAMs, hier einem Speicherteil SPT1 und einem Speicherteil SPT2 aufgebaut sein. In diesem Fall ist jeder Speichereingang SE1 bis SE4 mit jedem der beiden 3-Port-RAMs SPT1, SPT2 verbunden, die hinsichtlich des Einschreibens von Daten wie der 5-Port-RAM aufgebaut sind und auch gleich adressiert werden. Der Unterschied liegt nur darin, daß jeder der beiden 3-Port-RAMs nur zwei unabhängige Speicherausgänge, der eine die Speicherausgänge SA1 und SA2 und der andere die Speicherausgänge SA3 und SA4 hat.

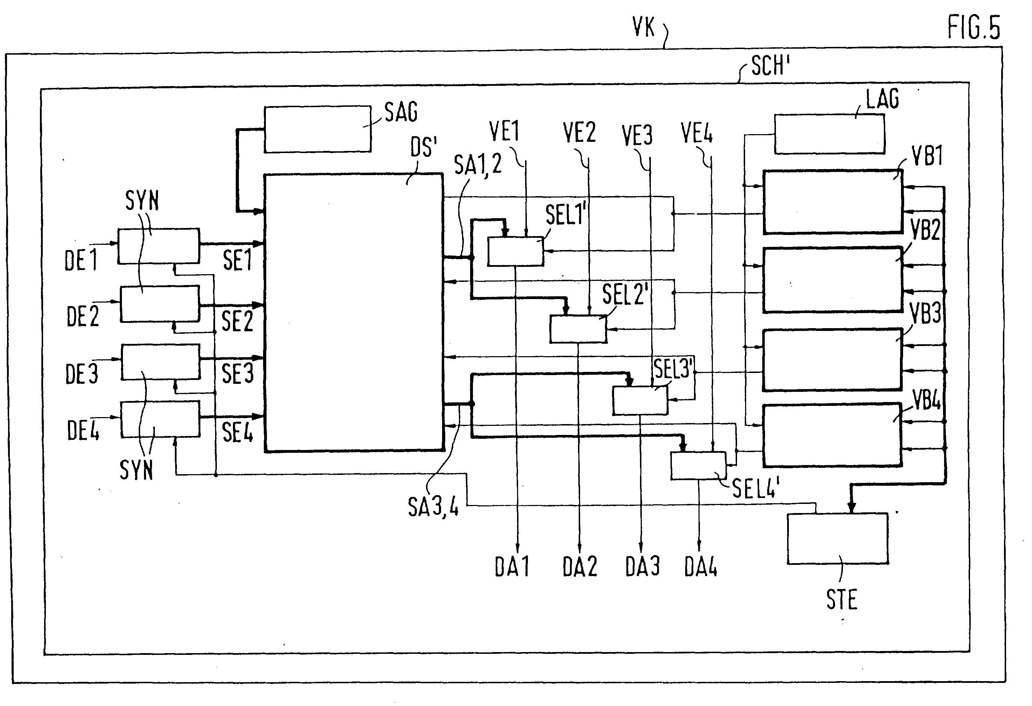

In Fig. 5 ist eine Schaltgruppe SCH' abgebildet, die als Datenspeicher DS' nur einen 3-Port-RAM enthält. Die Schaltgruppe SCH' kann in den Fällen eingesetzt werden, in denen die Zugriffszeit auf die einzelnen Speicherplätze lange genug ist, um in einem Zugriffsintervall voneinander unabhängig hintereinander zwei Speicherplätze auszulesen. Um diese Möglichkeit technisch ausnutzen zu können, wurde die Schaltgruppe SCH aus Fig. 1 in folgender Weise geändert. Der Datenspeicher DS' weist nur zwei Speicherausgänge SA1,2 und SA3,4 auf, über die der Datenspeicher DS' im Zeitmultiplexbetrieb ausgelesen wird, und die jeweils mit zwei Selektoren, der Speicherausgang SA1,2 mit den Selektoren SEL1' und SEL2'und der Speicherausgang SA3,4 mit den Selektoren SEL3' und SEL4', verbunden sind. Die Selektoren SEL1' bis SEL4' weisen einen Speicher zum Zwischenspeichern der beiden Teilsignale auf, die jeweils während einer Zugriffsperiode ausgelesen werden. Die Verbindungsspeicher VB1 bis VB4 steuern dann die Selektoren SEL1' bis SEL4' an. Durch einen entsprechenden Ansteuerbefehl eines Verbindungsspeichers VB1 bis VB4 an einen jeweils zugeordneten Selektoren SEL1' bis SEL4' wird dann an den jeweiligen Selektoren SEL1' bis SEL4' das gewünschte Teilsignal oder das an einem Verbindungseingang VE1 bis VE4 anliegende Teilsignal an den entsprechenden Datenausgang DA1 bis DA4 durchgeschaltet. Ansonsten ist die Schaltgruppe SCH' gemäß Fig. 5 wie die Schaltgruppe SCH gemäß Fig. 1 aufgebaut.

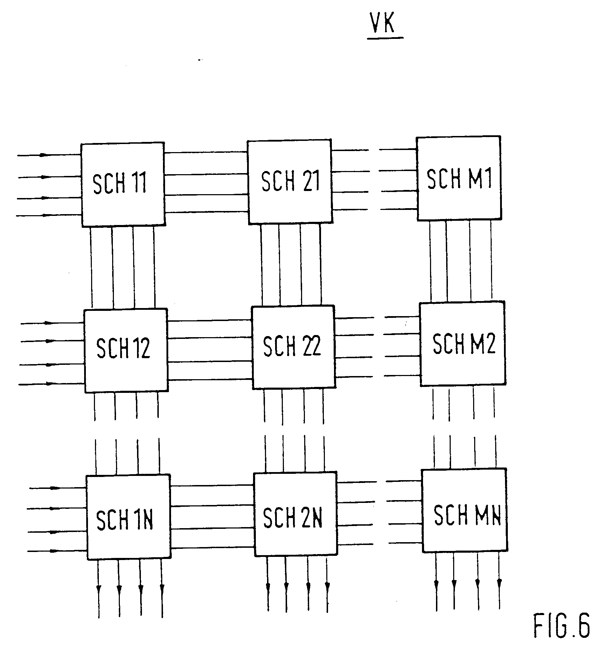

Die Schaltgruppen können auch eine Anzahl von Dateneingängen aufweisen, die sich von der Anzahl der Datenausgänge unterscheidet, so können z.B. acht Dateneingänge auf einen Datenspeicher mit acht Speichereingängen und vier Speicherausgängen geführt werden. Es kann auch eine andere Anzahl von Dateneingängen oder Datenausgängen gewählt werden, z.B. acht Dateneingänge und acht Datenausgänge, da die Anzahl letztendlich von den Anforderungen an das Koppelfeld des Verbindungsknotens VK abhängt, das z.B., wie in Fig. 6 abgebildet, aufgebaut sein kann. Das abgebildete Koppelfeld weist eine Vielzahl von Schaltgruppen SCHMN auf. Die Schaltgruppen SCHMN sind zeilen- und spaltenförmig angeordnet, dabei befinden sich in einer Spalte N Schaltgruppen SCH11 bis SCH1N und in einer Zeile M Schaltgruppen SCH11 bis SCHM1. M und N sind ganze Zahlen größer als 1. Die Eingänge des Koppelfeldes werden jeweils mit den Dateneingängen jeder Schaltgruppe einer Zeile verbunden. Die Datenausgänge jeder Schaltgruppe einer Spalte sind jeweils mit den Verbindungseingängen der nachfolgenden Schaltgruppe verbunden. Die Datenausgänge der letzten Schaltgruppen einer Spalte stellen den Ausgang des Koppelfeldes dar. Die Anzahl der Schaltgruppen wird durch die Art der Schaltgruppen und die erforderliche Anzahl von Ein- und Ausgängen des Koppelfeldes bestimmt.

In Fig. 6 ist nur ein Koppelfeld eines Verbindungsknotens zum Durchschalten in eine Übertragungsrichtung abgebildet. Ein Koppelfeld zum Durchschalten in die entgegengesetzte Richtung kann gleich aufgebaut sein. Alternativ läßt sich das Koppelfeld durch eine entsprechende Beschaltung auch bidirektional betreiben.

## Patentansprüche

1. Koppelfeld für Verbindungsknoten (VK) eines Nachrichtenübertragungssystems zum Durchschalten von Kanälen, die einem oder mehreren Zeitschlitzen des Rahmens eines aus Teilsignalen bestehenden Zeitmultiplexsignals zugeordnet sind,
- in dem wenigstens eine Schaltgruppe (SCH) mit einer Vielzahl von Dateneingängen (DE1 bis DE4) und einer Vielzahl von Datenausgängen (DA1 bis DA4) vorhanden ist,
- in dem die Kanäle eines an einem der Dateneingänge (DE1 bis DE4) eingehenden Zeitmultiplexsignals in ein beliebiges an einem der Datenausgänge (DA1 bis DA4) ausgehendes Zeitmultiplexsignal und/oder innerhalb eines Zeitmultiplexsignals durchgeschaltet werden können,
- in dem jede Schaltgruppe (SCH) wenigstens einen Datenspeicher (DS) enthält, in dem Daten teilsignalweise adressierbar zwischengespeichert sind, der Datenspeicher (DS) eine Vielzahl von Speichereingängen (SE1 bis SE4) und Speicherausgängen (SA1 bis SA4) aufweist, über die Daten eingeschrieben bzw. ausgelesen werden, die Speichereingänge (SE1 bis SE4) mit den Dateneingängen (DE1 bis DE4) verbunden sind und die Speicherausgänge (SA1 bis SA4) jeweils mit den Datenausgängen (DA1 bis DA4) verbunden sind, und
- in dem im Datenspeicher (DS) Teilsignale, die in den einzelnen Zeitschlitzen übertragen werden, periodisch wiederkehrend gleich adressiert werden,
**dadurch gekennzeichnet**,
- daß jeder einzelne Datenspeicher (DS) wenigstens zwei voneinander unabhängig lesbare Speicherausgänge (SA1, SA2; SA3, SA4) aufweist, und
- daß jedem Speicherausgang (SA1 bis SA4) ein Verbindungsspeicher (VB1 bis VB4) zugeordnet ist, über den die Adresse zum Auslesen des Datenspeichers (DS) angegeben wird, um die Kanäle in gewählter Reihenfolge an die gewählten Datenausgänge (DA1 bis DA4) durchzuschalten.

2. Koppelfeld nach Anspruch 1, dadurch gekennzeichnet, daß jeder Datenspeicher (DS) aus zwei oder mehreren Speicherteilen (SPT1, SPT2) besteht und die einzelnen Speicherteile (SPT1, SPT2) jeweils mit denselben Speichereingängen (SE1 bis SE4) verbunden sind, und jeder Speicherteil (SPT1, SPT2) wenigstens zwei voneinander unabhängige Speicherausgänge (SA1, SA2; SA3, SA4) aufweist.

3. Koppelfeld nach Anspruch 1 oder 2, dadurch gekennzeichnet, daß die Speicherausgänge (SA1 bis SA4) der Datenspeicher (DS) einer ersten Schaltgruppe (SCH12) oder Verbindungseingänge (VE1 bis VE4), die mit einer zweiten Schaltgruppe (SCH11) verbunden sind, in der ersten Schaltgruppe (SCH12) durch Selektoren (SEL1 bis SEL4) mit den Datenausgängen (DA1 bis DA4) wahlweise schaltbar verbunden sind, wobei jedem Speicherausgang (SA1 bis SA4) ein oder mehrere Selektoren (SEL1 bis SEL4) zugeordnet sind, und zum wahlweisen Durchschalten ein Speicherausgang (SA1 bis SA4) mit dem einen oder mit den mehreren zugeordneten Selektor (SEL1 bis SEL4) eine Schalteinheit bildet, die ihre Information zum Durchschalten von den Verbindungsspeichern (VB1 bis VB4) erhält.

4. Koppelfeld nach Anspruch 3, dadurch gekennzeichnet, daß mehrere Verbindungsspeicher (VB1, VB2; VB3, VB4) im Zeitmultiplexverfahren mit jeweils einem Speicherausgang (SA1,2; SA3,4) und den dazugehörigen Selektoren (SEL1', SEL2'; SEL3', SEL4') verbunden sind.

5. Koppelfeld nach Anspruch 1, dadurch gekennzeichnet, daß in dem Rahmen eines zu übertragenden Zeitmultiplexsignals die Übertragung mehrerer Kanäle organisiert ist und für jeden Kanal ein oder mehrere Zeitschlitze vorgesehen sind, die Zeitschlitze im Rahmen äquidistant angeordnet sind und im Datenspeicher (DS) Speicheradressen für wenigstens diejenigen Teilsignale vorhanden sind, die jeweils in einem Zeitschlitz eines Kanals in zwei aufeinanderfolgenden Rahmentaktperioden übertragbar sind.

6. Koppelfeld nach Anspruch 5, dadurch gekennzeichnet, daß im Datenspeicher (DS) für jeden Speichereingang (SE1 bis SE4) zwei Blöcke (B1, B2) mit einer gleichen Anzahl von Adressen vorgesehen sind und die Adresse durch die Bestimmung des Blocks (B1, B2) und die Bestimmung der Adresse innerhalb eines Blocks vorgegeben ist.

7. Koppelfeld nach Anspruch 6, dadurch gekennzeichnet, daß die Angabe der Adresse der Blöcke (B1, B2) für den Fall, daß zur Speicherung der Teilsignale eines Zeitmultiplexrahmens die Speicherkapazität einer ungeradzahligen Anzahl von Blöcken (B1, B2) erforderlich ist, durch eine Invertierschaltung nach jedem zweiten Rahmentakt für die Dauer einer Rahmentaktperiode invertiert erfolgt.

8. Koppelfeld nach Anspruch 3, dadurch gekennzeichnet, daß wenigstens zwei Schaltgruppen (SCH11, SCH12, SCH1N) in einer Spalte angeordnet sind, an denen unterschiedliche Dateneingänge (DE1 bis DE4) anliegen und deren Datenausgänge (DA1 bis DA4) wenigstens teilweise über die Selektoren (SEL1 bis SEL4) einer Schaltgruppe (SCH12, SCH1N) miteinander verbunden sind.

9. Koppelfeld nach Anspruch 3, dadurch gekennzeichnet, daß wenigstens zwei Schaltgruppen (SCH11, SCH21, SCHM1) in einer Zeile angeordnet sind, die getrennte Datenausgänge (DA1 bis DA4) aufweisen und die wenigstens teilweise mit denselben Dateneingängen (DA1 bis DA4) verbunden sind.

10. Koppelfeld nach den Ansprüchen 8 und 9, dadurch gekennzeichnet, daß Schaltgruppen (SCHMN) sowohl gemäß Anspruch 8 in Spalten als auch gemäß Anspruch 9 in Zeilen angeordnet sind.

11. Koppelfeld nach einem der vorhergehenden Ansprüche, dadurch gekennzeichnet, daß eine Synchronisationseinrichtung zwischen den Dateneingängen (DE1 bis DE4) und den Speichereingängen (SE1 bis SE4) angeordnet ist, und daß der oder die Datenspeicher (DS) und die Verbindungsspeicher (VB1 bis VB4) einschließlich deren Vorrichtungen zur Adressierung mit dem gleichen Takt versorgt und mit einem gemeinsamen Rahmentakt synchronisiert sind.

12. Koppelfeld nach Anspruch 1, dadurch gekennzeichnet,
- daß das Zeitmultiplexsignal einen Rahmen gemäß der synchronen digitalen Hierarchie, insbesondere ein STM-N-Rahmen gemäß den CCITT-Empfehlungen G.707 bis G.709 ist und die Kanäle virtuelle Container (VC) gemäß den CCITT-Empfehlungen G.707 bis G.709 darstellen,
- daß eine Vorrichtung vorhanden ist, die die Anordnung der virtuellen Container (VC) in ein STM-N-Zeitmultiplexsignal derart umformt, daß jeder Container in der ersten Zeile des Rahmens beginnt, und
- daß die virtuellen Container spaltenweise durchgeschaltet werden.

## Claims

1. Switching network for switching nodes (VK) of a communication system for switching channels which are associated with one or more time slots of the frame of a time-division multiplex signal consisting of component signals,
- which comprises at least one switch group (SCH) having a plurality of data inputs (DE1 to DE4) and a plurality of data outputs (DA1 to DA4),
- wherein the channels of a time-division mulitplex signal received at one of the data inputs (DE1 to DE4) can be switched through into an arbitrary time-division multiplex signal outgoing at one of the data outputs (DA1 to DA4), and/or within a time-division multiplex signal,
- wherein each switch group (SCH) comprises at least one data memory (DS) which temporarily stores data that are addressable component signal by component signal, said data memory (DS) having a plurality of memory inputs (SE1 to SE4) and memory outputs (SA1 to SA4) via which data is written and read, respectively, the memory inputs (SE1 to SE4) each being connected to a respective one of the data inputs (DE1 to DE4), and the memory outputs (SA1 to SA4) each being connected to a respective one of the data outputs (DA1 to DA4), and
- wherein component signals which are transmitted in the individual time slots are addressed in the data memory (DS) in the same manner on a periodically recurring basis,
**characterized in**
- that each individual data memory (DS) has at least two independently readable memory outputs (SA1, SA2; SA3, SA4), and
- that each memory output (SA1 to SA4) has associated therewith a connection memory (VB1 to VB4) via which the address for reading the data memory (DS) is specified in order to switch the channels in a selected sequence to the selected data outputs (DA1 to DA4).

2. A switching network as claimed in claim 1, characterized in that each data memory (DS) consists of two or more memory parts (SPT1, SPT2), that the individual memory parts (SPT1, SPT2) are connected to the same memory inputs (SE1 to SE4), and that each memory part (SPT1, SPT2) has at least two independent memory outputs (SA1, SA2; SA3, SA4).

3. A switching network as claimed in claim 1 or 2, characterized in that the memory outputs (SA1 to SA4) of the data memories (DS) of a first switch group (SCH12) or connection inputs (VE1 to VE4) connected to a second switch group (SCH11) are selectively connectable in the first switch group (SCH12) to the data outputs (DA1 to DA4) by means of selectors (SEL1 to SEL4), each memory output (SA1 to SA4) having one or more selectors (SEL1 to SEL4) associated therewith, and that each memory output (SA1 to SA4) and the associated selector (SEL1 to SEL4) combine to form a switching unit which receives its switching control information from the connection memories (VB1 to VB4).

4. A switching network as claimed in claim 3, characterized in that several connection memories (VB1, BV2; VB3, VB4) are each connected to a respective one of the memory outputs (SA1,2; SA3,4) and the associated selectors (SEL1', SEL2'; SEL3', SEL4') on a time-division multiplex basis.

5. A switching network as claimed in claim 1, characterized in that the transmission of two or more channels is organized in the frame of a time-division multiplex signal to be transmitted, that one or more time slots are provided for each channel, that the time slots in the frame are arranged equidistantly, and that the data memory (DS) contains memory addresses for at least those component signals which are transmittable in a respective time slot of a channel in two successive frame clock periods.

6. A switching network as claimed in claim 5, characterized in that for each memory input (SE1 to SE4), the data memory (DS) comprises two respective blocks (B1, B2) containing an indentical number of addresses, and that the address is determined by the designation of the respective block (B1, B2) and by the designation of the address within the respective block.

7. A switching network as claimed in claim 6, characterized in that if the memory capacity of an odd number of blocks (B1, B2) is required to store the component signals of a time-division multiplex frame, the addresses of the respective blocks (B1, B2) are inverted by an inverter after every other frame clock pulse for the duration of one frame clock period.

8. A switching network as claimed in claim 3, characterized in that at least two switch groups (SCH11, SCH12, SCH1N) which have different data inputs (DE1 to DE4) and whose data outputs (DA1 to DA4) are interconnected, at least in part, via the selectors (SEL1 to SEL4) of a switch group (SCH12, SCH1N) are arranged in a column.

9. A switching network as claimed in claim 3, characterized in that at least two switch groups (SCH11, SCH21, SCHM1) which have separate data ouputs (DA1 to DA4) and which are connected, at least in part, to the same data inputs (DA1 to DA4) are arranged in a row.

10. A switching network as claimed in claims 8 and 9, characterized in that switch groups (SCHMN) are arranged both in columns as claimed in claim 8 and in rows as claimed in claim 9.

11. A switching network as claimed in any one of the preceding claims, characterized in that a synchronizing device is provided between the data inputs (DE1 to DE4) and the memory inputs (SE1 to SE4), and that the data memory or memories (DS) and the connection memories (VB1 to VB4), including their addressing devices, are supplied with the same clock signal and are synchronized with a common frame clock.

12. A switching network as claimed in claim 1, characterized in
- that the time-division multiplex signal is a frame in accordance with the synchronous digital hierarchy, particularly an STM-N frame according to CCITT Recommendations G.707 to G.709, and that the channels represent virtual containers (VC) according to CCITT Recommendations G.707 to G.709,
- that a device is provided which converts the arrangement of the virtual containers (VC) into an STM-N time-division multiplex signal in such a way that each container begins in the first row of the frame, and
- that the virtual containers are switched through column by column.

## Revendications

1. Champ de couplage pour des noeuds de connexion (VK) d'un système de télécommunications, destiné à la commutation de voies associées à un ou plusieurs créneaux temporels de la trame d'un signal de multiplexage temporel composé de signaux partiels,
- dans lequel au moins un groupe de commutation (SCH) est muni d'une pluralité d'entrées de données (DE1 à DE4) et d'une pluralité de sorties de données (DA1 à DA4),
- dans lequel les voies d'un signal de multiplexage temporel entrant à l'une des entrées de données (DE1 à DE4) peuvent être commutées dans un signal de multiplexage temporel quelconque sortant à l'une des sorties de données (DA1 à DA4) et/ou à l'intérieur d'un signal de multiplexage temporel,
- dans lequel chaque groupe de commutation (SCH) comporte au moins une mémoire de données (DS) dans laquelle des données peuvent être enregistrées temporairement de manière partiellement adressable, la mémoire de données (DS) présentant une pluralité d'entrées de mémoire (SE1 à SE4) et de sorties de mémoire (SA1 à SA4) au moyen desquelles les données sont écrites ou lues, les entrées de mémoire (SE1 à SE4) étant connectées aux entrées de données (DE1 à DE4) et les sorties de mémoire (SA1 à SA4) étant à chaque fois connectées aux sorties de données (DA1 à DA4) et
- dans lequel des signaux partiels, qui sont transmis dans les créneaux temporels individuels, peuvent être adressés périodiquement de manière identique dans la mémoire de données (DS),
caractérisé en ce que
- chaque mémoire de données (DS) présente au moins deux sorties de mémoire (SA1, SA2 ; SA3, SA4) pouvant être lues indépendamment l'une de l'autre et
- à chaque sortie de mémoire (SA1 à SA4) est associée une mémoire de connexion (VB1 à VB4) au moyen de laquelle sont indiquées les adresses servant à lire la mémoire de données (DS) pour commuter les voies, selon un ordre choisi, aux sorties de données (DA1 à DA4) choisies.

2. Champ de couplage suivant la revendication 1, caractérisé en ce que chaque mémoire de données (DS) est composée de deux ou plusieurs parties de mémoire (SPT1, SPT2), en ce que chacune des parties de mémoire (SPT1, SPT2) est connectée aux mêmes entrées de mémoire (SE1 à SE4), et en ce que chaque partie de mémoire (SPT1, SPT2) présente au moins deux sorties de mémoire (SA1, SA2 ; SA3, SA4) indépendantes l'une de l'autre.

3. Champ de couplage suivant la revendication 1 ou 2, caractérisé en ce que les sorties de mémoires (SA1 à SA4) de la mémoire de données (DS) d'un premier groupe de commutation (SCH12) ou les entrées de connexion (VE1 à VE4) qui sont connectées à un deuxième groupe de commutation (SCH11) sont connectées de manière à pouvoir être commutées à volonté par des sélecteurs (SEL1 à SEL4) aux sorties de données (DA1 à DA4), dans le premier groupe de commutation (SCH12), un ou plusieurs sélecteurs (SEL1 à SEL4) étant associé(s) à chaque sortie de mémoire (SA1 à SA4), et une sortie de mémoire (SA1 à SA4) formant avec un ou plusieurs sélecteurs (SEL1 à SEL4) associés une unité de commutation pour la commutation à volonté, laquelle unité de commutation reçoit ses informations des mémoires de connexion (VB1 à VB4) pour la commutation.

4. Champ de couplage suivant la revendication 3, caractérisé en ce que plusieurs mémoires de connexion (VB1, VB2 ; VB3, VB4) sont connectées dans le procédé de multiplexage temporel à chaque fois à une sortie de mémoire (SA1,2 ; SA3,4) et aux sélecteurs (SEL1', SEL2'; SEL3', SEL4') correspondants.

5. Champ de couplage suivant la revendication 1, caractérisé en ce que la transmission de plusieurs voies est organisée dans la trame d'un signal de multiplexage temporel à transmettre, en ce qu'un ou plusieurs créneaux temporels sont prévus pour chaque canal, en ce que les créneaux temporels sont équidistants dans la trame, et en ce que des adresses de mémoire sont présentes dans la mémoire de données (DS) pour au moins les signaux partiels qui peuvent être transmis à chaque fois dans un créneau temporel d'une voie en deux périodes d'impulsion de trame se suivant.

6. Champ de couplage suivant la revendication 5, caractérisé en ce que deux blocs (B1, B2) ayant un même nombre d'adresses sont prévus dans la mémoire de données (DS) pour chaque entrée de mémoire (SE1 à SE4), et en ce que l'adresse est prédéfinie par la détermination du bloc (B1, B2) et la détermination de l'adresse à l'intérieur d'un bloc.

7. Champ de couplage suivant la revendication 6, caractérisé en ce que l'indication de l'adresse des blocs (B1, B2) se produit de manière inversée toutes les deux impulsions de trame, pour la durée de la période d'impulsion de trame, sous l'action d'un circuit inverseur, pour le cas où la capacité de mémoire d'un nombre impair de blocs (B1, B2) est nécessaire pour mémoriser les signaux partiels d'une trame de multiplexage temporel.

8. Champ de couplage suivant la revendication 3, caractérisé en ce qu'au moins deux groupes de commutation (SCH11, SCH12, SCHlN) sont disposés dans une colonne, lesdits groupes comportant des entrées de données différentes (DE1 à DE4) et des sorties de données (DA1 à DA4) reliées entre elles au moins partiellement au moyen des sélecteurs (SEL1 à SEL4) d'un groupe de commutation (SCH12, SCH1N).

9. Champ de couplage suivant la revendication 3, caractérisé en ce que dans une ligne sont disposés au moins deux groupes de commutation (SCH11, SCH21, SCHM1) présentant des sorties de données (DA1 à DA4) séparées et qui sont reliées au moins partiellement aux mêmes entrées de données (DE1 à DE4).

10. Champ de couplage suivant les revendications 8 et 9, caractérisé en ce que les groupes de commutation (SCHMN) sont disposés en colonne suivant la revendication 8, et en lignes suivant la revendication 9.

11. Champ de couplage suivant l'une des revendications précédentes, caractérisé en ce qu'un dispositif de synchronisation est disposé entre les entrées de données (DE1 à DE4) et les entrées de mémoire (SE1 à SE4), et en ce que la ou les mémoire(s) de données (DS) et les mémoires de connexion (VB1 à VB4), y compris leurs dispositifs d'adressage, reçoivent la même impulsion et sont synchronisées avec une impulsion de trame commune.

12. Champ de couplage suivant la revendication 1, caractérisé en ce que
- le signal de multiplexage temporel est une trame suivant la hiérarchie numérique synchrone, en particulier une trame N-ELM (en anglais : STM) suivant les recommandations du CCITT G.707 à G.709, et en ce que les voies représentent des conteneurs virtuels (VC) suivant les recommandations du CCITT G.707 à G.709,
- le champ comporte un dispositif qui convertit la disposition du conteneur virtuel (VC) en un signal de multiplexage temporel N-ELM de telle manière que chaque conteneur commence à la première ligne de la trame, et
- les conteneurs virtuels sont commutés par colonne.
